Europäisches Patentamt

European Patent Office

Office européen des brevets

(11) Publication number: **0 527 626 A2**

# EUROPEAN PATENT APPLICATION

(21) Application number: **92307303.5**

(22) Date of filing: **10.08.92**

(51) Int. Cl.⁵: **B23K 28/00**

(30) Priority: **12.08.91 JP 201725/91**
**16.10.91 JP 267350/91**
**31.01.92 JP 60880/92**

(43) Date of publication of application:
**17.02.93 Bulletin 93/07**

(84) Designated Contracting States:
**CH DE FR GB IT LI**

(71) Applicant: **Inoue, Kiyoshi**
**3-16-7 Kami-Yoga, Setagayaku**

**Tokyo(JP)**

(72) Inventor: **Inoue, Kiyoshi**
**3-16-7 Kami-Yoga, Setagayaku**
**Tokyo(JP)**

(74) Representative: **Enskat, Michael Antony Frank**
**Saunders & Dolleymore 9, Rickmansworth**
**Road**
**Watford Hertfordshire WD1 7HE (GB)**

(54) **A micro-welding method, apparatus and an electrode.**

(57) A spark-deposition electrode (3) is supported with an axially deformable elongate body (41) which consists, e.g. of a giant magnetostrictive material surrounded by an electromagnetic coil (42) and secured to a solid member. The coil (42) is electrically energized to effect an expansion/contraction of the body (41) along its axis at a predetermined amplitude to cause a bi-directional displacement of the depositing electrode (3) corresponding to the amplitude of the expansion/contraction of the deformable body (41), there instantaneously positioning the electrode (3) relative to a substrate (1) and controlling a gap therebetween. A spark discharge is produced between the electrode (3) and the substrate (1) across the instantaneously controlled gap in the presence of a depositing substance to transfer and fuse it in a small amount onto the substrate (1). The solid member and the substrate (10 are relatively displaced to sweep the electrode (3) over a selected surface of the substrate cumulatively over the surface. A lever (16) is coupled between the body (41) and the electrode (3) to magnify a displacement of the body (41) and to apply a magnified displacement to the electrode (3) so that a highly accurate positioning of the spark-deposition gap is attained. An actuator assembly incorporating the body (41) and including the lever member (16) is machined by wire-cut electrical discharge machining in a manner of "drawing a picture in a single stroke of the brush".

Fig 1

The present invention relates to a micro-welding method and apparatus utilizing spark deposition techniques and, more particularly, to a new and improved micro-welding method and apparatus of the type described far coating a surface of a conductive workpiece or substrate with a substance which is designed to hard-face, or to increase the wear resistance of, the workpiece or substrate surfaces or for other purposes.

In micro-welding utilizing spark-depositing techniques, an electrode typically serves as a source of the substance to be deposited on the workpiece surface. As a localized portion of the electrode and a localized portion of the workpiece surface are brought into and/or out of mutual contact, a spark discharge is caused to develop between them with a brief electrical impulse which is of an intensity sufficient to produce fusion of the localized electrode portion so that the localized fusion substance in a small amount is transferred to the small localized discharge-impinging area of the workpiece and cooled thereon to form a firm metallurgical bond with the workpiece substrate. By continuously sweeping such contact discharges over a selected surface region of the workpiece, a uniform layer of the deposit substance which is effective to harden or otherwise modify the original surface can be obtained.

In a typical form of spark-deposition, the electrode may be a solid rotary member rotated to bring its end face in sliding or tangential movement over the workpiece surface and the electrode substance is transferred onto the latter with the aid of repeated contact discharges. Such intermittent contact discharges can be effected by a capacitor circuit designed to charge and instantaneously discharge across the point of contact between the electrode and the workpiece and recharge as the contact region shifts from one contact to a next contact point between the electrode and the workpiece. Otherwise, a mechanical or electrical switching of a continuous voltage source has been employed to provide periodically a pulsed voltage across the moving interface of the electrode and the workpiece.

An electrode member composed of the depositable substance may also be repetitively driven into contact with a workpiece by imparting vibrations to the electrode. This has commonly been done in the prior art using a mechanical arrangement in which the electrode is held resiliently under a spring force by a solid electrode holder. A spark discharge is drawn between the electrode tip and the workpiece from a charged capacitor, thereby creating a partial weld between them. Coupled with the solid electrode holder, there is an electromagnetic coil for energization at least in part by a charging current of the capacitor or short-circuit condition between the electrode and the workpiece. The coil is here operable, upon the capacitor discharge, to draw the electrode tip abruptly away from the workpiece surface in order to break the weld and leave a substance from the electrode tip deposited upon the workpiece.

Difficulties have been encountered, however, in precisely positioning the depositing electrode and controlling the gap between the electrode and the substrate in the prior art. When excessively approached, the electrode may intensely hammer the substrate and often give rise to a distortion thereto.

As a consequence, when, for example, an edge portion is to be hard-faced by micro-welding as described, it may become round, thus deteriorating its precision, cutting quality or other intended performance characteristics.

It is accordingly an object of the present invention to provide an improved micro-welding method which enables a deposition electrode to be precisely positioned and its gap spacing with a substrate to be optimally controlled.

Another object of the present invention is to provide an apparatus for carrying out the method described.

These and other objects which will become more readily apparent hereinafter are attained in accordance with the present invention, in a first aspect thereof, by a method of micro-welding a substance onto a substrate by spark deposition, which method comprises the steps of: (a) supporting a depositing electrode with an axially deformable elongate body secured to a solid member; (b) effecting an expansion/contraction of the said elongate body along its axis at a predetermined amplitude to cause a bi-directional displacement of the said electrode corresponding to the amplitude of the said expansion/contraction of the said deformable body, thereby instantaneously positioning the said electrode relative to the said substrate and controlling a gap therebetween; (c) creating a spark discharge between the electrode and the substrate across the controlled gap in the presence of the said substance to transfer and fuse the latter in a small amount onto the said substrate; and (d) relatively displacing the said solid member and the said substrate to sweep the electrode over a surface of the substrate transverse to the said axis with steps (b) and (c) controlledly repeated, thereby depositing the said substance incrementally over the said surface.

Specifically, the axially deformable elongate body is composed of a magnetostrictive material. Alternatively it may be made of an electrostrictive material.

Preferably, the foregoing steps (b) and (d) are carried out under numerical control.

EP 0 527 626 A2

According to a specific feature of the invention, the amplitude of the expansion/contraction of the body is magnified by a predetermined number to obtain the displacement of the depositing electrode.

While the substance may be a material, e.g. pulverized, interposed between the electrode and the substrate, the substance is practically one furnished from the depositing electrode iteratively by the spark discharge.

The invention also provides, in a second aspect thereof, an apparatus for micro-welding a substance onto a substrate by spark-deposition, which apparatus comprises: an axially deformable elongate body secured to a solid member for supporting a depositing electrode; means electrically energizable for effecting an expansion/contraction of the elongate body along its axis at a predetermined amplitude to produce a bi-directional displacement of the depositing electrode corresponding to the amplitude of the expansion/contraction of the deformable body, thereby instantaneously positioning the electrode relative to the substrate and controlling the gap therebetween; a power supply for iteratively effecting a spark discharge between the electrode and the substrate across the instantaneously controlled gap in the presence of the substance to transfer and fuse it in a small amount onto the substrate; and means for relatively displacing the solid body and the substrate to sweep the instantaneously positioned electrode over a surface of the substrate transverse to the said axis across the controlled gap, thereby spark-depositing said substance incrementally over the said surface.

The apparatus preferably comprises lever means interposed between the axially deformable elongate body and the electrode for magnifying the said expansion/contraction of the body by a predetermined number to obtain the said displacement of said depositing electrode. Preferably, numerical control means is provided for acting on the said electrically energizable means for controlling the said expansion/contraction of the deformable body.

The invention also provides, in a third aspect thereof, a micro-welding electrode containing as its major component $TiB_2$ and TiC and $B_4C$ added thereto. Preferably, $TiB_2$ is contained at a proportion of 50 to 80 % by weight. Advantageously, the micro-welding electrode further contains at least one element selected from the group which consists of Fe, Mo, Co and Cr.

Still advantageously, the micro-welding electrode further contains at least one component selected from the group which consists of diamond particles. cBN (cubic foron nitride) particles and B (boron) particles.

According to a fourth aspect of the invention, there is provided a micro-welding electrode comprising a core material consisting of 3 stainless steel rod coated with a cladding material composed of $TiB_2$ as its principal component and TiC and $B_4C$ added thereto.

The present invention still further provides, in a fifth aspect thereof, a method of making a gap adjustment positioning actuator assembly for a micro-welding apparatus, having a magnifying lever for applying a small displacement to a point of action and generating a magnified displacement obtained by magnifying it about a fulcrum; and a housing connected to said point of action of the magnifying lever for incorporating a giant magnetostrictive material therein, which method comprises the steps of: wire-cut electrical-discharge-machining a blank member in a manner of "drawing a picture in a single stroke of the brush" to form integrally the said lever member and the said housing with the said blank member left uncut at the said fulcrum; and incorporating the said magnetostrictive material in the said housing and connecting it at the said point of action; and supporting a micro-welding electrode at a point of generation of the said magnified displacement in the said lever member.

According to a further aspect of the present invention, there is provided, in a sixth aspect thereof, a method of micro-welding a substance onto a substrate by spark deposition, ,which method comprises the steps of: (a) supporting a depositing electrode with an axially deformable elongate body secured to a solid member; (b) effecting a cyclic expansion and contraction of the said elongate body in a direction of its axis at a predetermined frequency and amplitude to cause vibrations of the said electrode at a frequency and amplitude corresponding to the frequency and amplitude of the said cyclic expansion and contraction of the said deformable body; and (c) iteratively creating a spark discharge between the vibrating electrode and the substrate across a gap in the presence of the said substance to transfer and fuse the latter incrementally in a small amount onto the said substrate. Specifically, the body is of a magnetostrictive material or, alternatively, an electrostrictive material. The said frequency of vibrations is preferably in a range of kHz. The method preferably includes magnifying the amplitude of the laid cyclic expansion and contraction by a predetermined number to obtain the amplitude of vibrations of the depositing electrode.

According to a still further aspect of the present invention, there is provided, in a seventh aspect thereof, an apparatus for micro-welding a substance onto a substrate by spark-deposition, which apparatus comprises an axially deformable elongate body for supporting a depositing electrode, means energized by a power supply for actuating said elongate body to produce a cyclic expansion and contraction thereof in a direction of its axis at a predetermined frequency and amplitude whereby said electrode is vibrated at a

3

frequency and amplitude corresponding to the frequency and amplitude of said cyclic expansion and contraction while a spark discharge is iteratively effected between the vibrating electrode and the substrate across a gap in the presence of said substance. Preferably, lever means is interposed between the said body and the electrode for magnifying the said cyclic expansion and contraction by a predetermined number to obtain the amplitude of the said vibrations of the electrode.

These and other objects, features and advantages of the present invention will become more readily apparent from the following description which is made with reference to the accompanying drawings in which:

FIG.1 is an elevational view, partly in section and partly in a block form, diagrammatically illustrating a micro-welding apparatus according to the present invention;

FIG.2 is a similar view diagrammatically illustrating an improved micro-welding arrangement embodying the principles of the present invention;

FIG.3 is an elevational view essentially in section diagrammatically illustrating a modification of the embodiment of FIG.2;

FIG.4 is a similar view diagrammatically illustration a further modification of the embodiment thereof; and

FIG.5 is a diagrammatic view illustrating a method of machining a blank member to form an essential parts of the arrangement of FIG.2.

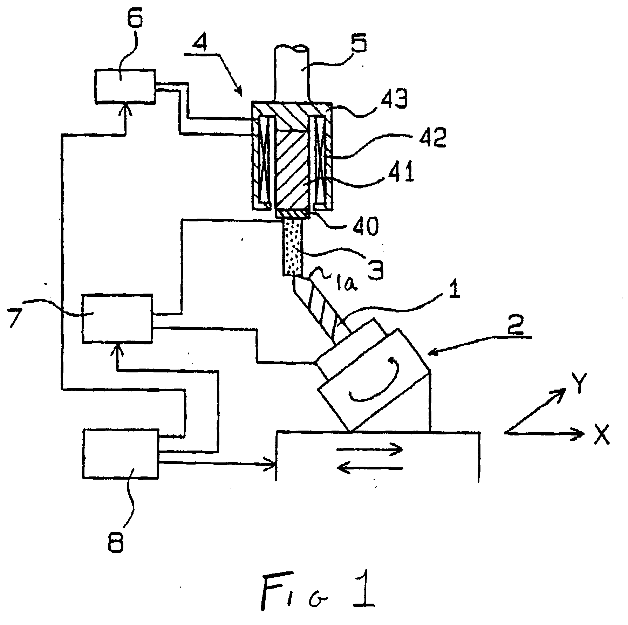

Referring now to FIG.1, there is shown a micro-welding apparatus designed to hard-face an edge portion of a tool 1 which constitutes a workpiece or substrate. The workpiece 1 is securely mounted on a worktable 2 adapted to be movable in an X-Y plane and also rotatable about the axis of the tool 1. Disposed in a light-contacting relationship with the edge portion 1a of the tool 1 is a spark-depositing electrode 3 composed of WC-Co or any other hard material. Means $\overline{4}$ for positioning the electrode 3 includes a chuck 40, an axially deformable elongate body 41, here constituted by a magnetostrictive and, preferably, a giant magnetostrictive material, a coil 42 and a yoke 43 and is carried by a shunk 5. The coil 42 is energized with high-frequency electric current by a power supply circuit 6. Also provided is a power supply unit 7 electrically connected to the workpiece 1 and the electrode 3 for supplying a pulsed discharge current across a gap between them. The motors (not shown) for driving the worktable 2, the power supply circuit 6 and the discharge power source 7 are controlledly operated by control signals furnished from a control unit 8 which may comprise a numerical controller.

In hard-facing the edge portion 1a of the tool 1 by micro-welding with the apparatus shown, the worktable 2 and the shunk 5 are driven to juxtapose the tip of the depositing electrode 3 with the edge portion 1a to be hard-faced. High-frequency energizing current is passed through the electromagnetic coil 42 from the supply circuit 6. The varying magnetic field thereby generated will produce a cyclic expansion and contraction of the elongate magnetostrictive body 41 in the direction of its axis to cause it to be oscillated, thereby bringing the depositing electrode 1 cyclically into ad out of contact with the edge portion 1a of the tool 1. Thus, the tip of the depositing electrode 3 is instantaneously positioned and its gap spacing with the edge portion 1a controlled directly as a function of the expansion/contraction of the body 41 securely supporting the electrode 3. Meanwhile, a pulsed electrical discharge is repetitively created across the thus instantaneously controlled gap between the electrode 3 and the edge potion 1a to transfer and fuse the substance from the electrode in a small amount onto the edge portion 1a. With these steps controlledly repeated under the commands of the control unit 8 to incrementally accumulate the substance transfer and fusion, the worktable 2 is driven also under commands of the control unit 8 to sweep the depositing electrode 3 continuously over an overall surface of the edge portion, thus to form a hard-faced layer uniformly over the surface.

In forming a spark-deposition or micro-welding layer as mentioned, it has been found that processing conditions including the frequency and amplitude of vibrations of the depositing electrode 3 and its gap spacing with the edge surface 1a of the tool 1 much influence the quality and accuracy of the depositing layer being formed. According to this aspect of the present invention, the frequency and the amplitude of vibrations of the magnetostrictive material 41 can readily be adjusted by adjusting the frequency and the output voltage Of the energizing current passed through the electromagnetic coil 42. Specifically, the vibrational frequency of the depositing electrode 3 is adjusted by adjusting the frequency of the energizing current passed through the electromagnetic coil 42 whereas the amplitude of vibrations of the electrode is dependent upon the voltage magnitude of the energizing current through the coil 42. A fine and extremely accurate adjustment and control of the gap spacing between the depositing tip Of the electrode 3 and the substrate 1a is also achieved by adjusting the bias voltage for the energizing current passed through the electromagnetic coil 42.

### Example I

A magnetostrictive material constituting the axially deformable elongate body 41 is made of a $Tb_{0.3}Dy_{0.7}Fe_{1.9}$ alloy and in the form of a cylinder having a diameter of 5 mm and a length of 10 cm. The cylinder exhibits an expansion of 0.15 mm (150 micrometers) with a magnetic field varied up to 600 Oersted by energizing the electromagnetic coil 42 with an electric current of 5 amperes (5000 mA). That is, the cylinder gives rise to an expansion of 0.03 micrometers per unit mA, which represents the ability to control with an extremely high precision the discharge gap spacing between the tip of the electrode 3 and the substrate 1a. A frequency response as high as 5 kHz is obtained. Practically, when the magnetortrictive body 41 is energized to oscillate at a frequency of 800 Hz and with an amplitude Of 0.5 to 1 micrometer, and pulsed electrical discharges have a peak current of 35 amperes and a discharge "on" time or duration of 10 microseconds, the tool 1 of a diameter of 10 mm is hard-faced over its entire edge surfaces 1a.

### Example II

Referring to the wear resistance of deposition, a drill tool 1 is micro-welded over its edge surfaces 1a with a substance transferred from a depositing electrode 3 composed, by weight, of 10 % W, 10 % V, 15 % B, 6 % TiN and the balance Fe. In drilling a melamine resinous material, the micro-welded drill 1 has a life approximately twice greater than an uncoated drill. It has been found that the micro-welding layer 1a should have a thickness generally of 10 to 100 micrometers so that the edge surfaces may have an increased wear resistance and yet be free from a loss in shape accuracy; thus retaining the precision-formed edge contour.

The present invention also relates to an improved micro-welding or spark-depositing electrode. Thus, with the recent progress of automated machine tools, demands for extended tool life has increasingly developed in order to enable unattended machining operations for a greater time span. Accordingly, the need arises for a micro-welding or spark-depositing electrode capable of forming tool edge portions which undergo less wear and are superior in cutting performance.

It has been found that the problem mentioned can be resolved by providing a micro-welding electrode composed, in major part, of a material consisting essentially of $TiB_2$ as its principal component and Tic and $B_4C$ added thereto. It is recommended that $TiB_2$ be contained at a proportion of 50 to 80 % by weight, that the material have added thereto at least one element selected from the group which consists of Fe, Mo, Co and Cr, and that the electrode further contain at least one additional substance selected from the group which consist of diamond particles, cBN (cubic boron nitride) particles and B particles. The problem mentioned is also resolved by providing a micro-welding electrode which comprises a core material constituted by a stainless steel rod coated with a cladding material composed of $TiB_2$ as its principal component, and TiC and $B_4C$ added thereto.

### Example III

In the table listed below, Example A and M represent various exemplary compositions which embody the micro-welding electrode according to this aspect of the present invention. It should be noted that the column of compositions includes respective proportions (% by weight for A to E and L and M , and % by volume for F to K) in number of these compositions whereas the column of performance includes the numbers of holes which could be made in a 13 Cr stainless steal plate of a thickness of 13 mm with an HSS tool of a diameter of 5.5 mm whose edge portions are hard-faced with electrodes of the respective compositions. By way of comparison, the number of holes which could be made with a same but untreated 5.5 mm diameter HSS tool was ten (10). In Examples F to M, references to "A", "B", "C", "E" etc. refer to respective compositions corresponding to those Examples identified by the respective reference letters.

## Table I

| [Example] << Composition >> | << Number of Holes >> |
| --- | --- |
| $TiB_2$ + TiC + $B_4C$ + Fe<br>[A] % by weight<br>(60 : 17 : 20 : 3) | 69 |
| $TiB_2$ + TiC + $B_4C$ + Mo<br>[B] % by weight<br>(60 : 27 : 3 : 10) | 81 |
| $TiB_2$ + TiC + $B_4C$ + Mo + Co<br>[C] % by weight<br>(70 : 5 : 20 : 3 : 2) | 76 |
| $TiB_2$ + TiC + $B_4C$ + Cr + Co<br>[D] % by weight<br>(70 : 10 : 10 : 5 : 5) | 75 |
| $TiB_2$ + TiC + $B_4C$ + Mo + Cr + Co<br>[E] % by weight | 80 |

(70 : 5 : 10 : 5 : 5 : 5)

---

"B" + cBN

[F] % by weight                   103

(70 : 30)

---

"A" + cBN

[G] % by weight                   123

(60 : 40)

---

"E" + Dia

[H] % by weight                   94

(70 : 30)

---

"C" + Dia + cBN

[I] % by weight                   122

(50 : 30 : 20)

---

"A" + Dia + cBN + SiC

[J] % by weight                   92

(70 : 10 : 10 : 10)

---

"A" + Cr + B

[K] % by weight                   121

(48 : 2 : 50)

---

[L]  A core material composed of 18-8

```
        stainless steel and the electrode                          110

        material "A" above coated thereon

        by micro-welding                            :
```
---
```
  [M]   A core material composed of 18-8

        stainless steel and the electrode                          110

        material "G" above coated thereon

        by micro-welding
```
---

From the forgoing test results, it is noted that whereas the 5.5 mm diameter HSS tool without hardening by micro-welding at all one its edge portions only allows drilling 10 holes, the tool with its edge portions hardened using a micro-welding electrode according to the present invention makes a marked improvement in tool life and durability.

As preciously described, the invention is, in a principal aspect thereof, directed to a micro-welding method and apparatus in which a depositing electrode is juxtaposed with a substrate to form a gap between them across which a pulsed electrical discharge is iteratively effected to transfer and fuse a depositing substance, typically, melted from the electrode, onto the substrate incrementally in a small amount. There is provided a gap positioning actuator including an axially deformable elongate body which may be formed of a magnetostrictive material or an electrostrictive material, but is preferably made of a so-called a giant magnetostrictive substance. Preferably, lever means is additionally provided and may be coupled between the magnetostrictive body and the depositing electrode to magnify an expansion/contraction of the body into a magnified displacement for application to the depositing electrode.

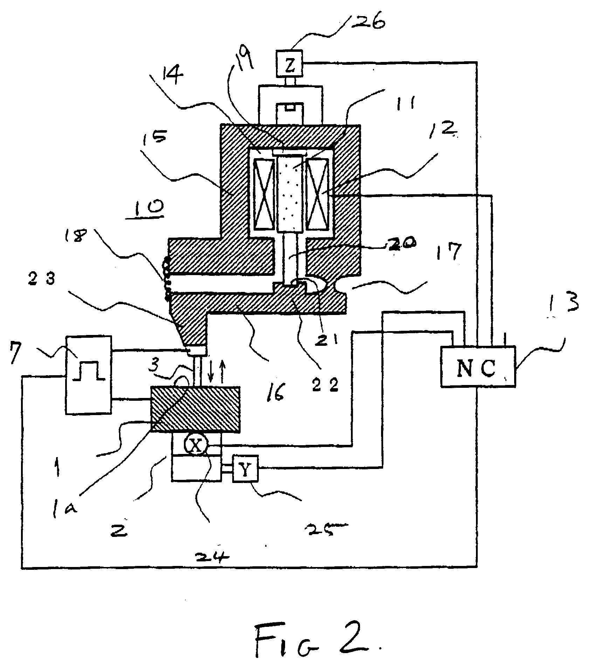

FIG.2, a positioning actuator as described is generally designated at 10 and comprises an axially deformable elongate body 11 composed of a giant magnetostrictive material which assumes an expansion/contraction when a coil 12 disposed so as to surround it is energized by a current supply 6 (FIG.1) which in the arrangement of FIG.2 is included in a control unit 13. The magnetostrictive body 11 and the coil 12 are incorporated in a chamber or receptacle 14 formed in a housing 15 which here has a lever member 16 integral therewith and connected thereto at a neck portion 17. The housing 15 and the lever member 16 are coupled together also with a spring 18. The magnetostrictive body 11 is secured at its upper end to the ceiling of the chamber 14 by means of a disk 19 and has at its lower end an output rod 20 whose lower end is in turn fitted in a recess 21 formed in the lever member 16 at a portion 22. The neck portion 17 connecting the housing 15 to the lever member 16 forms a fulcrum for the latter whereas the portion 22 constitutes a point of action at which an expansion/contraction displacement generated in the magnetostrictive body 11 is applied to the lever member 16.

A spark-depositing or micro-welding electrode 3 is securely supported, by means of a chuck, with a tool holder or shunk 23 extending vertically from the horizontally extending lever member 16 and formed integrally therewith, constituting a lever output point which generates a displacement for the electrode 3 magnified by the lever member 16.

Thus, with a series of pulses applied to the energizing coil 12 from the control unit 13, the magnetostrictive body assumes a cyclic expansion/contraction which causes a bi-directional displacement at the point of action 22. The displacement is relatively small and determined by the magnitude of the energizing current and has a frequency corresponding to the frequency of the applied pulses. The small but accurate displacement is magnified about the fulcrum 17 to generate a magnified displacement at the lever output portion 23 which is transmitted to the depositing electrode, thereby causing vibrations thereof precisely at that frequency and the magnified precision magnitude.

A workpiece 1 constituting a spark-deposition or micro-welding substrate 1a is shown as juxtaposed with the vertically extending electrode 3 and securely mounted on a worktable 2. The worktable 2 is here designed to be movable in an X-Y or horizontal plane by an X-axis motor 24 and a Y-axis motor 25 which are controlledly driven by an numerical controller contained in the control unit 13. Also, here again, a discharge power supply 7 is shown as electrically connected to the depositing electrode 3 and the workpiece 1 and is designed to be controllable by the control unit 13 to repetively create a spark discharge between the electrode 3 and the substrate in a controlled fashion.

The housing 15 constituting a head member for the depositing electrode 3 is here designed to be vertically movable by a Z-axis motor 26 controlled by the control unit 13 to bring the electrode 3 in juxtaposition and a light-contacting relationship with the workpiece 1.

Utilizing as a driving force an expansion/contraction and a cyclic displacement thereby which can be achieved with an extremely fine precision and which can be magnified and amplified with accuracy, advantages are here offered that the electrode positioning response is very rapid and displacement are finely accurate and a stable spark-discharge or micro-welding operation is permitted to be carried out in which a highly precise electrode positioning is attained with an unparalled accuracy and at a desired frequency.

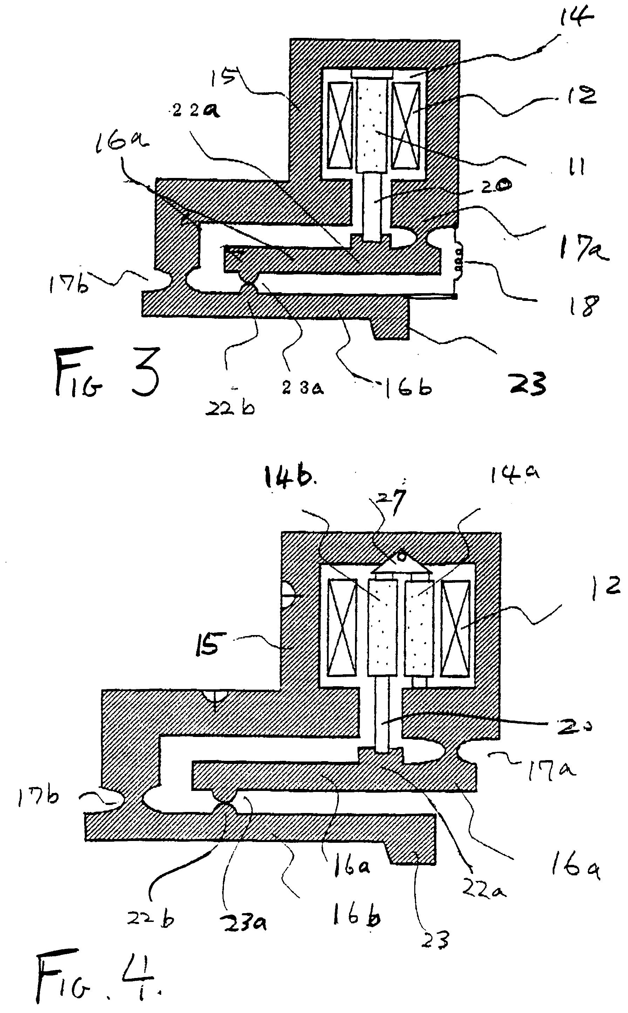

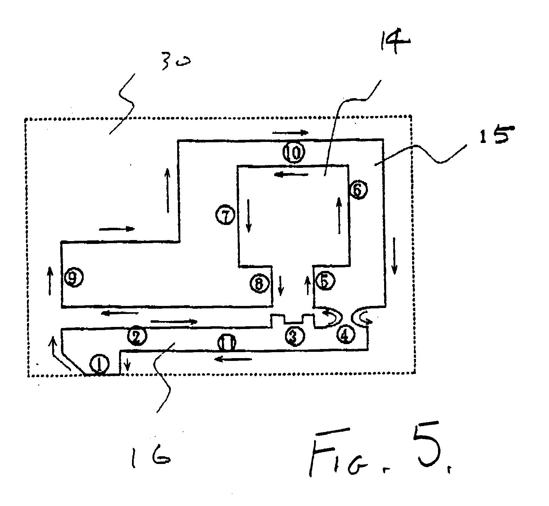

The housing 15, the chamber 14 therein and the lever member 16 including its output shunk portion 23 are advantageously cut from a solid blank member 30 (e.g of a stainless steal material) in the manner of "drawing a picture in a single stroke of the brush", as shown in FIG.5. Machining may start at 1 where a wire electrode is juxtaposed with the lower end of the lever output 23. The wire-cut machining path is programmed in the NC unit and is designed to move from 1 to 2 in the direction of arrow, to machine an area of the recess 21 constituting the point of action 22 for the lever member 16 at 3, to machine 4 where the neck portion 17 constituting the lever fulcrum is narrowly left uncut as machined integral with the housing 15 proper. Machining then proceeds through 5, 6, 7, and 8 to form the chamber or receptacle 14 in which to incorporate the magnetostrictive body 11 and the boil 12. Machining further advances through 9 and 10 to form the outline of the housing 15 and then cuts through the fulcrum 17 at 4 and the lower face of the lever member 16, thus completing the machining path of "drawing a picture in a single stroke of the brush".

Example IV

The giant magnetic material constituting the body 11 incorporated in the chamber or receptacle 14 is made of a $Tb_{0.3}Dy_{0.7}Fe_{0.95}$ and in the form of a rod of a diameter of 3.8 mm and a length of 50 mm. A magnetic field of 900 Oersted is applied to cause an expansion/contraction of the body, which is capable of effecting a controlled displacement of 50 micrometors. With the lever member 16 having a magnification factor of 10, a maximum magnified displacement of 0.5 mm is obtained. It can be driven at a frequency of 1 to 2 kHz.

Spark deposition or micro-welding can be carried out in this manner by vibrating the depositing electrode 3 mounted and held at the point of generation 23 in the lever 16 while a pulsed electrical discharge is repetitively created between the electrode 3 and the substrate 11 by applying current pulses from the power supply 7 thereto. The gap spacing between the electrode 8 and the substrate 1a is controlled by the NC unit 13 to controllingly drive the Z-axis motor 14 so that the electrode 8 may be juxtaposed with the substrate 1a across a small gap spacing. Across the gap spacing so positioned, the electrode 3 is vertically oscillated and a pulsed electrical discharge is controlledly repeated. Here, the amplitude of oscillations of the electrode 3 is controlled at a high response and as a function of an accurate magnitude of displacement of the body 14. Spark-discharge micro-welding processing is achieved with stability without the electrode hammering the substrate 1a. Furthermore, the electrode 3 is spacedly positioned relative to the substrate by the NC control unit 13 to sweep over a desired overall surface area to be deposition-processed. Deposition processing is thereby attained uniformly and in an elaborate quality over a required region of the substrate, and includes material addition, hard-facing and processing designed to increase the wear resistance of a substrate.

FIG.3 shows an embodiment of the invention in which a pair of levers 16a and 16b are employed to twice magnify. An expansion/contraction displacement of the actuated magnetostrictive body 11 is first applied at the point of action 22a of the lever 16a which magnifies it about the fulcrum 17a to generate a magnified displacement at the first lever output 23a. This magnified displacement is applied at the point of action 22b of the second lever 16b in contact with the output 23a and is further magnified about a second fulcrum 17b to generate a magnified displacement at a second lever output which is constituted by the shunk portion or electrode holder 23. Here again, the levers 16a and 16b are designed to be integral with the solid housing member 15. The depositing electrode, not shown, is securely supported with the shunk 23 and controlledly oscillated to repetitively create a pulsed electrical discharges with the substrate.

FIG.4 represents a modification of the FIG.3 embodiment in which a pair of magnetostrictive bodies 14a and 14b are connected in series with a lever joint 26 in order to obtain a twice-magnified displacement at the output rod 20. Controlledly energized by a coil 12, the first body 14a assumes an expansion/contraction which is applied via the lever joint 27 to the second magnetostrictive body 14b and, with an expansion/contraction of the latter added, acts on the point of action 22a of the first magnifying lever 16a. Since the levers 2 and 3 each assume a magnification, there develop a displacement or vibrations with an extremely augmented amplitude.

While the foregoing embodiments make use of magnifying levers 41a and 41b which are not separated from the housing 15 and machined integral therewith at respective fulcra, it should be noted that they may alternatively be connected with the housing by means of pin joints or the like. Also, the magnifying lever may be a linkage mechanism with the fulcrum and the point of actions varied to obtain a magnified displacement and generate it at the point of generation.

## Claims

1. A method of micro-welding a substance onto a substrate (1) by deposition, characterised by the steps of:

   (a) supporting a depositing electrode (3) with an axially deformable elongate body (41) secured to solid member;
   (b) effecting an expansion/contraction of said elongate body (41) along its axis at a predetermined amplitude to cause a bi-directional displacement of said electrode (3) corresponding to the amplitude of said expansion/contraction of said deformable body, thereby instantaneously positioning said electrode relative to said substrate and controlling a gap therebetween;
   (c) creating a spark discharge between the electrode (3) and the substrate (1) across the controlled gap in the presence of said substrate (1) to transfer and fuse the latter in a small amount onto said substrate (1); and
   (d) relatively displacing said solid member and said substrate to sweep the electrode (3) over a surface of the substrate transverse to said axis 4 with steps (d) and (c) controlledly repeated, thereby depositing said substance incrementally over said surface.

2. A method according to claim 1, characterised in that sets (b) and (d) are carried out under numerical control.

3. A method of making a gap adjustment positioning actuator assembly for a micro-welding apparatus, having a magnifying lever (16) for applying a small displacement to a point of action and generating a magnified displacement obtained by magnifying it about a fulcrum; and a housing connected to said point of action of said magnifying lever for incorporating a giant magnetostrictive material therein, said method being characterized by the steps of:

   wire-cut electrical-discharge-machining a blank member in a manner of "drawing a picture in a single stroke of the brush" to form integrally said lever member and said housing with blank member left uncut at said fulcrum;

   incorporating said magnetostrictive material in said housing and connecting it at said point of action; and

   supporting a micro-welding electrode (3) at a point of generation of said magnified displacement in said lever member.

4. A method of micro-welding a substance onto a substrate (1) by spark deposition, characterized by the steps of:

   (a) supporting a depositing electrode (3) with an axially deformable elongate body (41) secured to a solid member;
   (b) effecting a cyclic expansion and contraction of said elongate body (41) in a direction of its axis at a predetermined frequency and amplitude to cause vibrations of said electrode at a frequency and amplitude corresponding to the frequency and amplitude of said cyclic expansion and contraction of said deformable body; and
   (c) iteratively creating a spark discharge between the vibrating electrode and the substrate across a gap in the presence of said substance to transfer and fuse the latter incrementally in a small amount onto said substrate.

5. A method according to claim 4, characterised in that said frequency of vibrations is in a range of 1 to 2 kHz.

6. A method according to claim 1 or to claim 4, further characterised by the step of magnifying said amplitude of said expansion and contraction by a predetermined number in obtaining said amplitude of vibrations of said depositing electrode.

7. A method according to any one of claims 1, 2 and 4, characterised in that said substance is furnished from said depositing electrode iteratively by said spark discharge.

8. A method according to claim 7, wherein said electrode contains as its principal component $TiB_2$ and TiC and $B_4C$ added thereto.

9. Apparatus for micro-welding a substance onto a substrate by spark-deposition, characterised by:
   an axially deformable elongate body (41) secured to a solid member for supporting a depositing electrode (3);
   means (42) electrically energizable for effecting an expansion/contraction of said elongate body (41) along its axis at a predetermined amplitude to produce a bi-directional displacement of said depositing electrode (3) corresponding to the amplitude of said expansion/contraction of said deformable body (41), thereby instantaneously positioning said electrode relative to said substrate and controlling the gap therebetween;
   a power supply (7) for iterative effecting a spark discharge between the electrode (3) and the substrate (1) across the instantaneously controlled gap in the presence of said substance (1) to transfer and fuse it in a small onto said substrate (1); and
   means for relatively displacing said solid body and said substrate (1) to sweep the instantaneously positioned electrode (3) over a surface of said substrate (1) transverse to said axis across the controlled gap, thereby spark-depositing said substance incrementally over said surface (1).

10. Apparatus according to claim 11, characterised by lever means (16) interposed between said body and said electrode (3) for magnifying said expansion/contraction of the deformable body (41) by a predetermined number to obtain said displacement of said depositing electrode.

11. Apparatus according to claim 9 or to claim 10, characterised by numerical control means (8) for acting on said electrically energizable means for controlling said expansion/contraction of said deformable body (41).

12. A micro-welding electrode containing as its major component $TiB_2$ and Tic and $B_4C$ added thereto.

13. A micro-welding electrode comprising a core material consisting of a stainless steel rod coated with a cladding material composed of $TiB_2$ as its principal component and Tic and $B_4C$ added thereto.

14. An apparatus for micro-welding a substance onto a substrate (1) by spark-deposition, characterised by an axially deformable elongate body (41) for supporting a depositing electrode (3), means (42) energizable by a power supply (7) for actuating said elongate body (41) to produce a cyclic expansion and contraction thereof in a direction of its axis at a predetermined frequency and amplitude whereby said electrode is vibrated at a frequency and amplitude corresponding to the frequency and amplitude of said cyclic expansion and contraction while a spark discharge is iteratively effected between the vibrating electrode (3) and the substrate (1) across a gap in the presence of said substance.

15. Apparatus according to claim 14, characterised by lever means (16) interposed between said body (41) and said electrode (3) for magnifying the amplitude of said cyclic expansion and contraction by a predetermined number to obtain said amplitude of vibrations of the electrode (3).

16. A micro-welding electrode according to claim 12 or a method according to claim 8, characterised in that $TiB_2$ is contained in the electrode at a proportion of 50 to 80% by weight.

17. An electrode according to claim 12 or a method according to claim 9, characterised in that the electrode contains at least one element selected from the group which consists of Fe, Mo, Co and Cr.

18. An electrode or method according to any one of claims 8, 11, 12 or 17, characterised in that the electrode contains at least one component selected from the group which consists of diamond particles, CBN particles and B particles.

19. A method or apparatus according to any preceding claim, characterised in that the body (41) is composed of a magnetostrictive material or an electrostrictive material.

Fig 1

FIG 2.

FIG 3

FIG. 4.

Fig. 5.